# EUROPÄISCHE PATENTANMELDUNG

(11) **EP 1 095 760 A1**
(43) Veröffentlichungstag der Anmeldung: **02.05.2001**
(21) Anmeldenummer: 00118555.2
(22) Anmeldetag: 26.08.2000
(51) Int. Cl.: B29C 59/00, B21D 31/00, G03F 7/20, A01N 25/34, A61L 29/14

(54) **Strukturierte Oberflächen mit zelladhäsions- und zellproliferationshemmenden Eigenschaften**

(30) Priorität: 20.10.1999 DE 19950452
(71) Anmelder: Creavis Gesellschaft für Technologie und Innovation mbH, 45772 Marl (DE)
(72) Erfinder: Oles, Markus, Dr., 45525 Hattingen (DE); Hommes, Peter, Dr., 48165 Münster (DE); Schleich, Bernhard, Dr., 45657 Recklinghausen (DE)

(57) **Zusammenfassung**

Die Erfindung betrifft strukturierte Oberflächen mit zellproliferationshemmenden und zelladhäsionshemmenden Eigenschaften.

Die erfindungsgemäßen Oberflächen weisen Erhebungen mit einer mittleren Höhe von 50 nm bis 10 µm und einem mittleren Abstand von 50 nm bis 10 µm sowie einer Oberflächenenergie des unstrukturierten Materials von mehr als 20 mN/m auf.

Weiterhin betrifft die Erfindung ein Verfahren zur Herstellung der Oberfläche sowie deren Verwendung, z. B. in Zellkulturgefäßen.

## Beschreibung

Die Erfindung betrifft mikrostrukturierte Oberflächen mit geringer Oberflächenenergie, die die Adhäsion und Proliferation von Zellen vermindern.

Mikrostrukturen auf Oberflächen sind bekannt und werden insbesondere für selbstreinigende Oberflächen verwendet.

Wesentliches Merkmal dieser Oberflächen ist eine schwere Benetzbarkeit der Fläche mit Wasser oder wäßrigen Systemen. Oberflächen, von denen Wasser leicht abläuft oder abperlt, müssen entweder sehr hydrophil oder hydrophob sein. Hydrophile Oberflächen besitzen geringe Kontaktwinkel mit Wasser; dies bewirkt eine rasche Verteilung des Wassers auf der Oberfläche und schließlich ein schnelles Ablaufen des so entstandenen Wasserfilms von der Oberfläche. Der Einsatz von hydrophoben Materialien zur Herstellung von hydrophoben Oberflächen ist bekannt; eine Weiterentwicklung dieser Oberflächen besteht darin, die Oberflächen im mm-Bereich bis nm-Bereich zu strukturieren.

H. Seito et al. beschreibt in Surface Coating International V, 1997, S. 168 ff, beispielsweise eine solche hydrophobe, mikrostrukturierte Oberfläche. Hier werden Partikel aus Fluorpolymeren auf Metalloberflächen aufgebracht, wobei eine stark erniedrigte Benetzbarkeit der so erzeugten Oberflächen gegenüber Wasser und eine erheblich reduzierte Vereisungsneigung festgestellt wurde. Adhäsions- und proliferationshemmende Eigenschaften an Zellkulturen wurden hier aber nicht nachgewiesen.

In US-PS 3354022 und WO 96/04123 sind weitere Verfahren zu Erniedrigung der Benetzbarkeit von Gegenständen durch topologische Veränderungen der Oberflächen beschrieben. Hier werden künstliche Erhebungen bzw. Vertiefungen mit einer Höhe von 5 bis 100 µm und ein Abstand von 5 bis 500 µm auf hydrophobe oder nach der Strukturierung hydrophobierte Werkstoffe aufgebracht. Oberflächen dieser Art führen zu einer schnellen Tropfenbildung, wobei die abrollenden Tropfen Schmutzteilchen aufnehmen und die Oberfläche reinigen. Untersuchungen mit vollständig benetzten Oberflächen, z. B. mit physiologischer Nährlösung, sind nicht beschrieben. Ebenso fehlen Angaben über das Aspektverhältnis der Erhebungen.

Aus einem anderen technischen Gebiet, der Biologie, ist bekannt, daß Oberflächentopographien im Bereich von ca. 20 nm bis 50 µm (Nano - und Mikrotopographie) das Zellphysiologische Verhalten beeinflussen können. Dieser Größenbereich deckt die supramolekularen und zellulären Dimensionen ab. Topographien über 50 µm (Makrotopographie) werden als rauhe Kontaktstrukturen von harten Knochenimplantaten, als Vliese und Gewebe z. B. für Gefäßprotesen und poröse Matrizes für Zellkulturen im Rahmen des Tissue Engineerings verwendet (R.P. Lanza, "Principles of Tissue Engineering", Academic Press, ISBN 1-57059-342-6, Chapter 11).

Zur gezielten Steuerung des Zellwachstums werden unterschiedliche Oberflächentopographien verwendet. Bei regelmäßigen periodischen Strukturen wird die Topographie durch die Angabe der Geometrie eines Elements und der Periodizität charakterisiert. Bei zufälligen Topographien, die auch in der Zellkultur verwendet werden, sind statistische Angaben über die Verteilung der geometrischen Parameter (Höhen, Steigungen, Korrelationslängen usw.) erforderlich. Eisenbart et al. in Biomaterials (1996), 17, 1399-1403, Curtis et al. in Biomaterials (1997), 18, 1577-1583 und Wen et al. in Biomed. Mater. Eng. (1996), 6, 173-189 beschreiben einige Topographietypen, die bereits in Zellkulturtechniken getestet wurden. Die Ergebnisse dieser Untersuchung sind zum Teil sehr widersprüchlich. Trotz großer Anstrengungen ist es nicht gelungen, allgemeine Prinzipien für das Zellwachstum aus den Oberflächentopographien abzuleiten. Obwohl bereits sehr unterschiedliche geometrische Strukturen, Periodizitäten und Abmessungen untersucht wurden, ist es bisher nicht gelungen, Oberflächenstrukturen zu finden, die Zelladhäsions- und - proliferationshemmende Eigenschaften besitzen.

Für viele Anwendungen wäre es erwünscht, Oberflachen mit Zelladhäsions- und/oder zellproliferationsvermindernden Eigenschaften einzusetzen.

So sind Besiedlungen und Ausbreitungen von Bakterien oder Zellen auf Oberflächen von Rohrleitungen, Behältern oder Verpackungen im hohen Maße unerwünscht. Es bilden sich häufig Schleimschichten, die Mikrobenpopulationen extrem ansteigen lassen, die Wasser-, Getränke- und Lebensmittelqualitäten nachhaltig beeinträchtigen und sogar zum Verderben der Ware sowie zur gesundheitlichen Schädigung der Verbraucher führen können.

Aus allen Lebensbereichen, in denen Hygiene von Bedeutung ist, sind Bakterien oder Zellen fernzuhalten. Davon betroffen sind Textilien für den direkten Körperkontakt, insbesondere für den Intimbereich und für die Kranken- und Altenpflege. Außerdem sind Zellen und Bakterien fernzuhalten von Möbel- und Geräteoberflächen in Pflegestationen, insbesondere im Bereich der Intensivpflege und der Kleinstkinder-Pflege, in Krankenhäusern, insbesondere in Räumen für medizinische Eingriffe und in Isolierstationen für kritische Infektionsfälle sowie in Toiletten.

Gegenwärtig werden Geräte, Oberflächen von Möbeln und Textilien gegen Bakterien oder Zellen im Bedarfsfall oder auch vorsorglich mit Chemikalien oder deren Lösungen sowie Mischungen behandelt, die als Desinfektionsmittel mehr oder weniger breit und massiv antimikrobiell wirken. Solche chemischen Mittel wirken unspezifisch, sind häufig selbst toxisch oder reizend oder bilden gesundheitlich bedenkliche Abbauprodukte. Häufig zeigen sich auch Unverträglichkeiten bei entsprechend sensibilisierten Personen.
Es wäre daher wünschenswert, Oberflächen mit zellproliferationshemmenden und/oder zelladhäsionshemmenden Eigenschaften auszurüsten.
Überraschenderweise wurde gefunden, das strukturierte Oberflächen, deren Strukturen ein bestimmtes Aspektverhältnis, d. h. ein bestimmtes Verhältnis zwischen Höhe und Mittelwertbreite aufweisen, die Ansiedelung und Verbreitung von Zellen weitgehend dauerhaft verhindern.

Zellen im Sinne der vorliegenden Erfindung sind z. B. Fibroblasten, immortalisierte und primäre Zelllinien, so wie alle anderen eukrayontischen Zellen und keine Bakterien. Bakterien besitzen ein deutlich anderes Adhäsions- und Proliferationsverhalten als Zellen.

Die Adhäsion von Zellen und Bakterien auf verschiedenen Materialien ist ein sehr komplexer Vorgang, dessen Ausgestaltung entscheidend für die biologische Funktion ist. Zellen nutzen zur Anheftung an die Oberfläche Ankerproteine, die eine gerichtete Bewegung (Migration) und Differenzierung der Zelle erlauben. Da Zellen nur im Verband überlebensfähig sind, ist diese Funktion wichtig für die Formgebung der Zellen. In wäßriger Lösung, ohne Verbindung zu einer Oberfläche, sind Zellen nicht in der Lage, sich zu teilen. Bakterien, sie haften mit einfach strukturierten Proteinen an der Oberfläche, aber sie benötigen diese Proteine nicht zur Migration, sondern ausschließlich zum Schutz und zur Optimierung der Überlebensbedingungen. Ein Teilung kann auch in wäßriger Lösung erfolgen. Die Proliferation der Bakterien auf Oberflächen wird somit von anderen Mechanismen gesteuert als die Proliferation von Zellen auf Oberflächen.

Gegenstand der vorliegenden Erfindung sind daher strukturierte Oberflächen mit zellproliferationshemmenden Eigenschaften, wobei die Oberflächen Erhebungen mit einer mittleren Höhe von 50 nm bis 10 µm und einen mittleren Abstand von 10 nm bis 50 µm sowie Oberflächenenergien des unstrukturierten Materials von mehr als 20 mN/m, bevorzugt 20 bis 80 mN/m, besonders bevorzugt 20 bis 60 mN/m aufweisen. Oberflächen und Erhebungen dieser Größenordnung sind bereits bekannt und z. B. in DE 19 80 3787.2 und DE 19 91 4007.3 beschrieben.

Diese Oberflächen sind jedoch ausgesprochen hydrophob und daher stark wasserabweisend. Sie besitzen gegenüber Wasser einen sehr hohen Randwinkel und können von Verschmutzungen durch Abspülen mit Wasser gereinigt werden; bzw. begünstigen das Ablaufen von Wasser.

Diese Eigenschaften sind im vorliegenden Fall unerwünscht, da Zellen nur in wäßrigen Systemen leben und somit eine vollständige Benetzung der Oberflächen erforderlich ist.

Bakterien und andere Mikroorganismen benötigen zur Adhäsion an eine Oberfläche oder zur Vermehrung an einer Oberfläche Wasser, welches an hydrophoben Oberflächen nicht, sehr wohl jedoch an den Oberflächen der vorliegenden Erfindung zur Verfügung steht. Erfindungsgemäß strukturierte Oberflächen verhindern das Anwachsen von Zellen; sie sind somit zellproliferationshemmend. Die erfindungsgemäßen Oberflächen ermöglichen jedoch unter entsprechenden Rahmenbedingungen, wie Luftfeuchtigkeit und Temperatur ein ortsdefiniertes Wachstum von Bakterien und anderen Mikroorganismen an den unstrukturierten Teilbereichen. Da der zugrundeliegende Effekt nicht auf antimikrobiellen Wirkstoffen beruht, sondern auf einem physikalischen Effekt, ist eine Beeinträchtigung des Wachstums von Zellen auf den unstrukturierten Teilbereichen durch die strukturierten Bereiche z. B. durch Ausbluten und/oder Diffusion von Wirkstoffen ausgeschlossen.

Die Verwendung von strukturierten oder rauhen Oberflächen in der Medizin und Biologie ist z. B. durch E. Eisenbarth et al. in 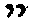 Influence of the surface structure of titanium materials on the adhesion of fibroblasts", Biomaterials 1996, Vol. 17, No. 14, S. 1399-1403 untersucht worden. Hier wird gezeigt, daß die Zahl von adhärierten Zellen unabhängig vom verwendeten Material mit zunehmender Rauhigkeit ansteigt, was konträr zum Effekt der vorliegenden Erfindung liegt. Weiterhin konnte R. G. Richard zeigen, daß verschiedene Rauhigkeiten die Adhäsion von Fibroblasten nicht verändert ( 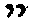 The effects of surface roughness on fibroblast adhesion in vitro, Injury 1996, Vol. 27 Suppl. 3, S. C38-C43).

Die Verwendung von mikrostrukturierten Oberflächen zur Verminderung der Zellproliferation und/oder Zelladhäsion lag daher nicht im Trend der Technik.

Diese unstrukturierten Materialien können diese Stoffe beinhalten, vollständig oder nur an der zu strukturierenden Oberfläche aus diesen Stoffen bestehen.

Die erfindungsgemäßen, strukturierten Oberflächen können aus den verschiedensten Materialien hergestellt werden, sofern diese in unstrukturierten Zustand eine Oberflächenenergie von mehr als 20 mN/m aufweisen, hergestellt werden. Hier bieten sich z. B. Gold, Titan, Silizium, Kohlenstoff,Quarzglas, Lithiumniobat, Siliciumnitrid, Siliziumcarbid oder Hydroxylapatit an.

Die unstrukturierten Materialien können diese Stoffe beinhalten oder vollständig aus diesen Stoffen bestehen oder nur an der zu strukturierenden Oberfläche aus diesen Stoffen bestehen.

Weiterhin können die unstrukturierten Materialien Silikone, Polydioxane, Fibronectin, Kollagen, Fibrin, Polyurethane, Polymethylmethacrylat, Polyacrylsäure, Polyvinylchlorid, Polyethylen, Polypropylen, Polyimide oder Polyamide, jeweils als Homo- oder Copolymer beinhalten, vollständig aus diesen Stoffen bestehen oder nur an der zu strukturierenden Oberfläche aus diesen Stoffen bestehen.

Die Materialien sind nicht toxisch und können auch in der Zellkulturtechnik verwendet werden.

Die Charakterisierung von Oberflächen bezüglich ihrer Benetzbarkeit kann über die Messung der Oberflächenenergie erfolgen. Diese Größe ist z. B. über die Messung der Randwinkel am glatten, d. h. unstrukturierten Material von verschiedenen Flüssigkeiten zugänglich (D.K. Owens, R. C. Wendt, J. Appl. Polym. Sci. 13, 1741 (1969)) und wird in mN/m (Mill-Newton pro Meter) angegeben. Nach Owens et al. bestimmt, weisen glatte Polytetrafluorethylen-Oberflächen eine Oberflächenenergie von 19.1 mN/m auf, wobei der Randwinkel (Fortschreitwinkel) mit Wasser 120 ° beträgt. Allgemein besitzen hydrophobe Materialien mit Wasser Kontakt- oder Randwinkel (Fortschreitwinkel) von über 90 °. Polypropylen weist bei einer Oberflächenenergie von 29-30 mN/m (in Abhängigkeit von der molekularen Struktur) beispielsweise gegenüber Wasser Fortschreitwinkel von etwa 105 ° auf.

Die Bestimmung des Randwinkels bzw. der Oberflächenenergie erfolgt zweckmäßig an glatten Oberflächen, um eine bessere Vergleichbarkeit zu gewährleisten. Die Materialeigenschaften "Hydrophobie", "Flüssigkeitsabweisend" oder "Flüssigkeitsbenetzend" werden auch durch die chemische Zusammensetzung der obersten Molekülschichten der Oberfläche mitbestimmt. Ein höherer oder niedrigerer Randwinkel bzw. niedrigere oder höhere Oberflächenenergie eines Materials kann daher auch durch Beschichtungsverfahren erreicht werden.

Die hydrophoben oder hydrophilen Eigenschaften einer Oberfläche können somit über die Oberflächenenergie definiert werden, wobei der Randwinkel am glatten, d. h. unstrukturierten Material von verschiedenen Flüssigkeiten ein Maß für die Oberflächenenergie, die in mN/m angegeben wird, ist.

Für bestimmte Anwendungsgebiete z. B. in der Zellkulturtechnik können auch andere Dimensionen der Erhebungen zum Einsatz kommen. Bevorzugt liegt daher die mittlere Höhe der Erhebung bei 50 nm bis 4 µm bei einem mittleren Abstand von 50 nm bis 10 µm. Alternativ kann die mittlere Höhe der Erhebungen 50 nm bis 10 µm bei einem mittleren Abstand von 50 nm bis 4 µm betragen. Besonders bevorzugt besitzen die Erhebungen einen Höhe von 50 nm bis 4 µm bei einem mittleren Abstand von 50 nm bis 4 µm.

Das Verhältnis von Höhe zu Breite der Erhebungen, das Aspektverhältnis, ist wie schon erwähnt, von großer Bedeutung. Die Erhebungen können Aspektverhältnisse von 0,5 bis 20, bevorzugt 1 bis 10, besonders bevorzugt 1 bis 5, aufweisen. Weiterhin ist die chemische Zusammensetzung der obersten Monolage des Materials wichtig. Bei der Verwendung von erfindungsgemäßen Oberflächen in der Zellkulturtechnik werden definierte chemische Oberflächeneigenschaften gefordert. Die Oberfläche muß zellverträglich und frei von Endotoxinen sein. Die Oberflächen können auch nach der Formgebung modifiziert werden, so daß die Erhebungen Oberflächenenergie von mehr als 20 mN/m aufweisen können.

Die erfindungsgemäßen strukturierten Oberflächen können auch unstrukturierte Teilbereiche, insbesondere unstrukturierte Teilbereiche mit einer Oberflächenenergie von 10 bis 20 mN/m aufweisen.

An den unstrukturierten Teilbereichen können Zellen adhärieren bzw. proliferieren. Auf diese Weise können z. B. Bioassaysys oder Zellkulturtestplatten mit den erfindungsgemäßen Oberflächen bzw. mit den erfindungsgemäßen Verfahren ausgestattet werden. Die unstrukturierten Teilbereiche können mechanisch oder lithographisch erzeugt werden.

Die unstrukturierten Teilbereiche können auch mit zelladhäsionsfördernden Stoffen wie Poly-L-amid oder zellwachstumsfördernden Stoffen wie fötalem Kälberserum, Rinderserum, Ziegenserum oder Pferdeserum beschichtet oder behandelt werden.

Es ist weiterhin ein Verfahren zur Herstellung von strukturierten Oberflächen mit zellproliferationshemmenden Eigenschaften Gegenstand der vorliegenden Erfindung, wobei Erhebungen mit einer mittleren Höhe von 50 nm bis 10 µm und einem mittleren Abstand von 50 nm bis 10 µm auf ein unstrukturiertes Material mit einer Oberflächenenergie von mehr als 20 mN/m mechanisch eingeprägt, durch lithographische Verfahren eingeätzt oder durch formgebende Verarbeitung aufgebracht werden.
Zur Veränderung der chemischen Oberflächeneigenschaften sind weiterhin Verfahren, bei denen Radikalstellen auf der Oberfläche erzeugt werden, zu nennen. Das strukturierte oder unstrukturierte Material kann mittels Plasma, UV- oder Gammastrahlung sowie speziellen Photoinitiatoren behandelt werden. Nach einer solchen Aktivierung der Oberfläche, d. h. Erzeugung von freien Radikalen können zusätzlich Monomere aufpolymerisiert werden. Ein solches Verfahren generiert eine chemisch besonders widerstandsfähige Beschichtung. Als Monomere kommen z. B. Acrylate, Methacrylate und andere Vinylderivate wie z. B. Methylmethacrylat, Ethylenoxid oder Vinylchlorid in Frage.

Die Formgebung oder Strukturierung der Oberfläche kann durch Prägen/Walzen oder gleichzeitig beim makroskopischen Formen des Gegenstandes wie z. B. Gießen, Spritzgießen oder anderen formgebenden Verfahren erfolgen. Hierzu sind die entsprechenden Negativformen der erwünschten Struktur erforderlich.

Negativformen lassen sich industriell z. B. mit der Ligatechnik (R. Wechsung in Mikroelektronik, 9, 1995, S. 34 ff.) herstellen. Hier werden zunächst eine oder mehrere Masken durch Elektronenstrahllithographie mit den Dimensionen der gewünschten Erhebungen hergestellt. Diese Masken dienen zur Belichtung einer Photoresistschicht durch Röntgentiefenlithographie, wodurch eine Positivform erhalten wird. Die Zwischenräume im Photoresist werden anschließend durch galvanische Abscheidung eines Metalls aufgefüllt. Die so erhaltene Metallstruktur stellt eine Negativform für die gewünschte Struktur dar.

In einer anderen Ausführungsform der vorliegenden Erfindung sind die Erhebungen auf einer etwas groberen Überstruktur angeordnet. Die Erhebungen weisen die oben aufgeführten Dimensionen auf und können auf einer Überstruktur mit einer mittleren Höhe von 10 µm bis 1 mm und einem mittleren Abstand von 10 µm bis 1 mm aufgebracht werden. Die Erhebungen der Überstruktur können ebenfalls eingeprägt, durch lithographische Verfahren oder formgebende Verarbeitungen, aufgebracht werden. Die Erhebungen und die Überstruktur können gleichzeitig oder nacheinander, d. h. zunächst die Überstruktur, dann die Erhebungen, mechanisch eingeprägt, durch lithographische Verfahren oder durch formgebende Verarbeitung aufgebracht werden.

Die Formgebung bzw. Strukturierung der Oberflächen erfolgt bei Oberflachen mit Überstruktur wie bei Oberflächen nur mit Erhebungen, zweckmäßig in einem Arbeitsgang. Eine nachträgliche chemische Modifikation einer bereits erzeugten doppeltstrukturierten Oberfläche ist selbstverständlich ebenso möglich.

Mechanische Verfahren zur Einbringung von Strukturen auf unstrukturierte Oberflächen oder unstrukturierten Teilbereichen auf strukturierten Oberflächen sind z. B. Präge- oder Stempelverfahren mit vorgefertigten Formen oder Stempeln (Nadeln). Lithographische Verfahren sind z. B. die Liga-Technik, die Röntgenlithographie aber auch ablative Verfahren z. B. mit Laserstrahlung.

Formgebende Verfahren sind z. B. Guß- oder Spritzgußverfahren, die in der Kunststoffverarbeitung üblich sind.

Die Verwendung der erfindungsgemäß strukturierten Oberflächen bzw. der erfindungsgemäß hergestellten strukturierten Oberflächen ist ein weiterer Gegenstand der vorliegenden Erfindung.

Erfindungsgemäße Oberflächen können z. B. als Zellkulturgefäß für Bioassays im Zellscreening, im Wirkstoffscreening neuer Arzneimittel in der Medizin oder im Pflanzenschutz oder in der Toxikologie verwendet werden. Die erfindungsgemäßen Oberflächen können ebenfalls für medizinische Implantate wie z. B. Herzklappen oder Herzschrittmacher verwendet werden,

Die folgenden Beispiele sollen die Erfindung näher erläutern, ohne jedoch ihren Schutzumfang einzuschränken.

### Beispiel:

Die mikrostrukturierten Oberflächen werden mit einem Prägeverfahren hergestellt. Die Prägewerkzeuge (Abformwerkzeuge) wurden im LIGA-Verfahren hergestellt, einem Strukturierungsverfahren, das auf Grundprozessen der Röntgen-**LI**thographie, **G**alvanik und **A**bformung beruht. Das Verfahren unterscheidet sich von der Mikromechanik dadurch, daß die Strukturen nicht durch ein Ätzprozeß im Grundmaterial erzeugt werden sondern über ein Werkzeug z. B. im Spritzgußverfahren kostengünstig abgeformt werden. Nach der lithografischen Resistbelichtung (strahlungsempfindliches Polymer) und Entwicklung wird die so erzeugte Lackstruktur als Form für einen Galvanikprozeß verwendet, bei dem in die freigelegten Zwischenräume eine Metallegierung abgeschieden wird. Anschließend wird die Lackstruktur entfernt und die übrig gebliebene Metallstruktur wird zum Abformwerkzeug benutzt (G. Gerlach, W. Dötzel "Grundlagen der Mikrostystemtechnik" Carl Hanser Verlag München, 1997, Seite 60f).

Die so hergestellten Strukturen weisen im Falle des Analyten 1 nur eine Feinstruktur mit einer mittleren Höhe von 4 µm und einem mittleren Abstand von 3 µm auf. Die Strukturen der Analyten 2 bis 4 weisen zusätzlich eine Überstruktur mit einer mittleren Höhe von 20 µm und einem mittleren Abstand von 32 µm auf. Die Feinstruktur entspricht der des Analyten 1.

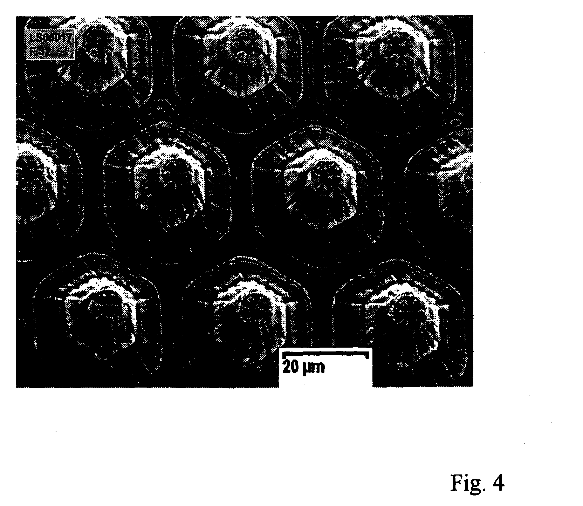

Fig. 4 zeigt eine REM-Aufnahme mit Überstruktur und Feinstruktur (Analyt 4). Aufgrund der begrenzten Tiefenschärfe der REM-Aufnahme ist die Feinstruktur nur auf den 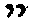 Spitzen" der Überstruktur zu erkennen.

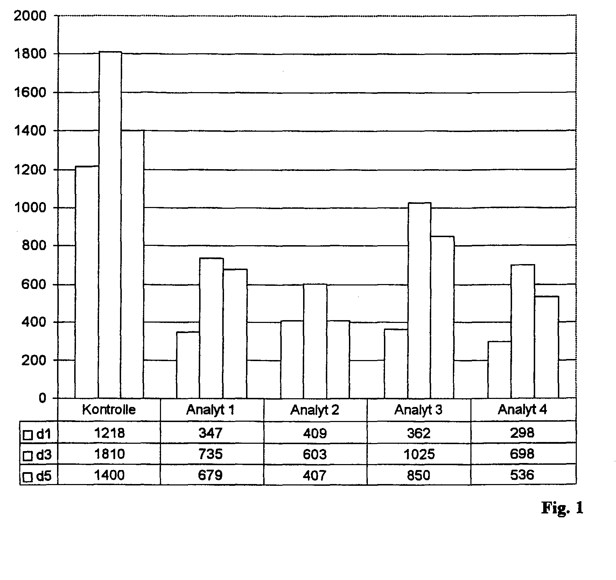

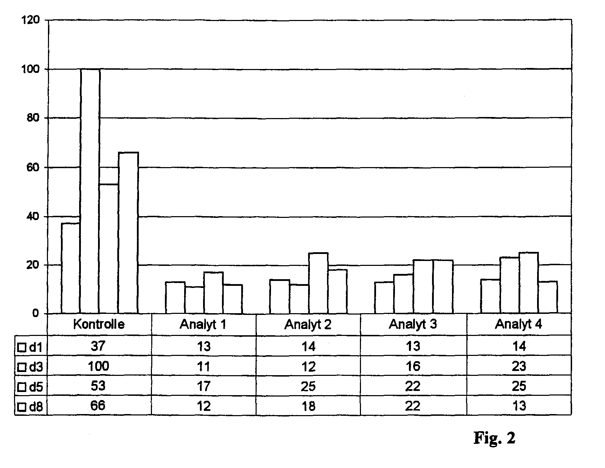

Aus diesen so mikrostrukturierten Polycarbonat-Oberflächen werden Scheiben mit einem Durchmesser von 9 mm herausgeschnitten und in einer 96-Loch-Zellkultur-Platte (Fa. Nunk, Katalog-Nr. 167008) überführt. Die strukturierte Seite zeigt dabei nach oben. Unter einer sterilen Arbeitsbank werden die Materialien mit humanen Hautfibroplasten in der Passage 2 inokuliert (3 x 10⁴ Zellen/mL, 100 µl/Loch). Mit verschiedenen Assays kann das Wachstumsverhalten der Fibroblasten-Zellen beurteilt werden. Als Kontrolle dient nicht oberflächenstrukturiertes Material, das ebenfalls mit humanen Hautfibroblasten inokuliert wird. An verschiedenen Tagen wurden die nicht adhärenten Zellfraktionen gezählt. Es zeigte sich, daß an den mikrostrukturierten Oberflächen zwischen 20 und 40 % weniger Zellen am Boden adhärierten. Fig. 1 zeigt die Anzahl der an der Oberfläche adhärierten lebenden Zellen. Mit Hilfe eines MTT-Assays wurde die Proliferationsrate der Gesamtkultur und die Vitalität bestimmt. Dieser Assay beruht darauf, daß ein Tetrazoliumsalz von Zellen aufgenommen und in einer Mitochondrien abhängigen Reaktion zum Formazan reduziert wird. Nach Lyse der Zellen wird dieser Farbstoff freigesetzt und kann photometrisch quantifiziert werden. Da die MTT-Reduktion nur durch intakte Mitochondrien erfolgen kann, lassen die Meßwerte Rückschlüsse auf die Vitalität und die Proliferation der Zellen zu. Eine Auswertung der MTT-Messung der adhärierten Zellen an verschiedenen Tagen zeigte ein deutlich reduziertes Zellwachstum auf den mikrostrukturierten Oberflächen im Vergleich zur Kontrolloberfläche. Die Zellproliferation betrug teilweise weniger als 20 % im Vergleich zur unstrukturierten Oberfläche (siehe Fig. 2, MTT-Assay, relativ Komax).

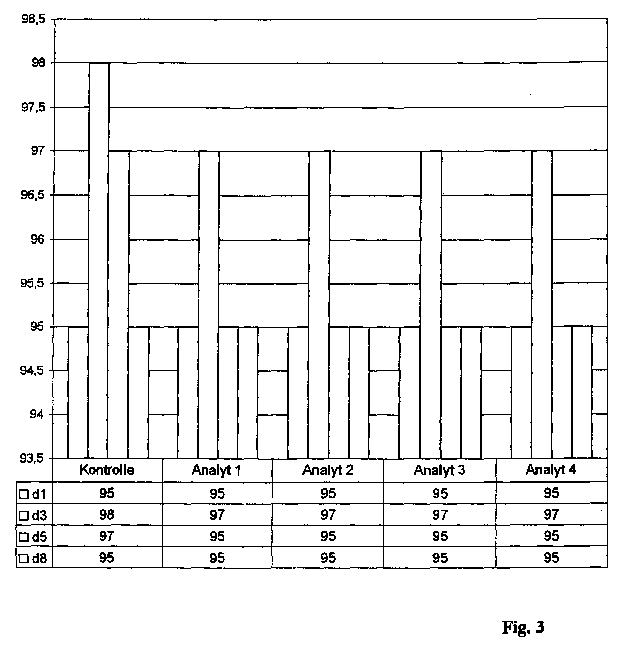

Mit Hilfe eines live/dead- Fluoreszenzassays wurde der Anteil der lebenden und der toten adhärierten Zellen ermittelt. Es zeigte sich weder bei der Kontrolle noch bei den oberflächenstrukturierten Proben ein signifikanter Unterschied im Verhältnis der lebenden zu den toten Zellen (Fig. 3), d. h. die Zelladhäsion bzw. Zellproliferation wurde erfolgreich unterdrückt, ohne die Zellen abzutöten. Toxische Effekte der strukturierten Oberflächen können somit ausgeschlossen werden.

### Legende zu den Figuren 1 bis 3

d1, d3, d5, d8 bezeichnen den 1, 3, 5 oder 8. Tag nach Inokulation.

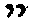 Kontrolle" bezeichnet einen Testkörper aus dem gleichen Material ohne erfindungsgemäße Strukturierung der Oberfläche. Analyt 1, 2, 3 und 4 bezeichnen jeweils unterschiedlich strukturierte Oberflächen mit
den Parametern: 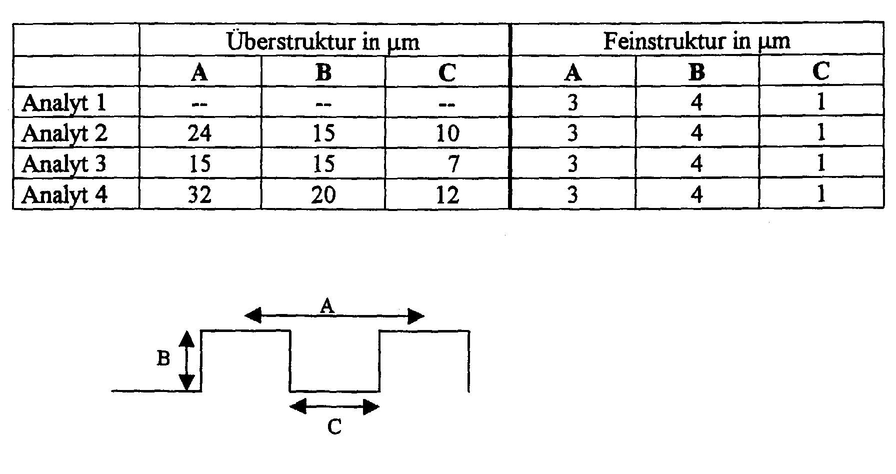
Fig. 1 zeigt einen Adhärenz-Assay, wobei auf der y-Achse die adhärierten Zellen pro Analyt aufgetragen sind. Die entsprechenden Absolutzahlen finden sich jeweils unter der Balkengrafik. Der jeweils linke Balken bezeichnet den Wert für d1, der mittlere Balken den Wert für d2, der rechte Balken den Wert für d3.
Fig. 2 zeigt einen MTT-Assay, wobei auf der y-Achse der Prozentsatz der vitalen Zellen in Relation zum Kontroll-Assay angegeben ist. Die entsprechenden Prozentzahlen finden sich jeweils unter der Balkengrafik. Die Balken bezeichnen von links nach rechts jeweils die Werte für d1, d3, d5 und d8.
Fig. 3 zeigt eine Live/Dead-Assay, wobei auf der y-Achse der Prozentsatz an lebenden Zellen angegeben ist. Diese entsprechenden Prozentzahlen finden sich jeweils unter der Balkengrafik. Die Balken bezeichnen von links nach rechts jeweils die Werte für d1, d3, d5 und d8.

## Patentansprüche

1. Strukturierte Oberflächen mit zellproliferationshemmenden Eigenschaften,
dadurch gekennzeichnet,
daß die Oberflächen Erhebungen mit einer mittleren Höhe von 50 nm bis 10 µm und einem mittleren Abstand von 50 nm bis 10 µm sowie Oberflächenenergien des unstrukturierten Materials von mehr als 20 mN/m aufweisen.

2. Strukturierte Oberflächen nach Anspruch 1,
dadurch gekennzeichnet,
daß die Erhebungen eine mittlere Höhe von 50 nm bis 4 µm aufweisen.

3. Strukturierte Oberflächen nach Anspruch 1,
dadurch gekennzeichnet,
daß der mittlere Abstand der Erhebungen 50 nm bis 4 µm beträgt.

4. Strukturierte Oberflächen nach Anspruch 1,
dadurch gekennzeichnet,
daß die Erhebungen eine mittlere Höhe von 50 nm bis 4 µm und einem mittleren Abstand von 50 nm bis 4 µm aufweisen.

5. Strukturierte Oberflachen nach einem der Ansprüche 1 bis 4,
dadurch gekennzeichnet,
daß die Erhebungen ein Aspektverhältnis von 0,5 bis 20 aufweisen.

6. Strukturierte Oberflächen nach Anspruch 5,
dadurch gekennzeichnet,
daß die Erhebungen ein Aspektverhältnis von 1 bis 10 aufweisen.

7. Strukturierte Oberflächen nach Anspruch 5,
dadurch gekennzeichnet,
daß die Erhebungen ein Aspektverhältnis von 1 bis 5 aufweisen.

8. Strukturierte Oberflächen nach einem der Anspüche 1 bis 7,
dadurch gekennzeichnet,
daß die Erhebungen auf einer Überstruktur mit einer mittleren Höhe von 10 µm bis 1 mm und einem mittleren Abstand von 10 µm bis 1 mm aufgebracht sind.

9. Strukturierte Oberflächen nach einem der Ansprüche 1 bis 8,
dadurch gekennzeichnet,
daß die Oberflächen zusätzlich unstrukturierte Teilbereiche aufweisen.

10. Strukturierte Oberflächen nach Anspruch 9,
dadurch gekennzeichnet,
daß die unstrukturierten Teilbereiche eine Oberflächenenergie von 10 bis 20 mN/m aufweisen.

11. Strukturierte Oberflächen nach einem der Ansprüche 1 bis 10,
dadurch gekennzeichnet,
daß das unstrukturierte Material Silikone, Polydioxane, Fibronectin, Kollagen, Fibrin, Polyurethane, Polymethylmethacrylat, Polyacrylsäure, Polyvinylchlorid, Polyethylen, Polypropylen, Polyimide oder Polyamide als Homo- oder Copolymer beinhaltet.

12. Strukturierte Oberflächen nach einem der Ansprüche 1 bis 10,
dadurch gekennzeichnet,
daß das unstrukturierte Material aus Gold, Titan, Quarzglas, Lithiumniobat, Siliziumcarbid, Siliciumnitrid, Hydroxylapatit oder Silizium besteht.

13. Verfahren zur Herstellung von strukturierten Oberflächen mit zellproliferationshemmenden Eigenschaften,
dadurch gekennzeichnet,
daß Erhebungen mit einer mittleren Höhe von 50 nm bis 10 µm und einem mittleren Abstand von 50 nm bis 10 µm auf ein unstrukturiertes Material mit einer Oberflächenenergie von mehr als 20 mN/m mechanisch eingeprägt oder durch lithographische Verfahren eingeätzt oder durch formgebende Verarbeitung aufgebracht werden.

14. Verfahren nach Anspruch 13,
dadurch gekennzeichnet,
daß die Erhebungen auf einer Überstruktur mit einer mittleren Höhe von 10 µm bis 1 mm und einem mittleren Abstand von 10 µm bis 1 mm gleichzeitig mit der Überstruktur oder nach dieser mechanisch eingeprägt, durch lithographische Verfahren eingeätzt oder durch formgebende Verarbeitung aufgebracht werden.

15. Verfahren nach einem der Ansprüche 13 oder 14,
dadurch gekennzeichnet,
daß die Erhebungen nachträglich mit einem Material mit einer Oberflächenenergie von mehr als 20 mN/m ausgestattet werden.

16. Verfahren nach einem der Ansprüche 13 bis 15,
dadurch gekennzeichnet,
daß das unstrukturierte Material Silikone, Polydioxane, Fibronectin, Kollagen, Fibrin, Polyurethane, Polymethylmethacrylat, Polyacrylsäure, Polyvinylchlorid, Polyethylen, Polypropylen, Polyimide oder Polyamide als Homo- oder Copolymer beinhaltet.

17. Verfahren nach einem der Ansprüche 13 bis 15,
dadurch gekennzeichnet,
daß das unstrukturierte Material aus Gold, Titan, Quarzglas, Lithiumniobat, Siliziumcarbid, Siliciumnitrid, Hydroxylapatit oder Silizium besteht.

18. Verfahren nach einem der Ansprüche 13 bis 17,
dadurch gekennzeichnet,
daß das unstrukturierte oder strukturierte Material einer Plasmabehandlung unterzogen wird.

19. Verfahren nach einem der Ansprüche 13 bis 18,
dadurch gekennzeichnet,
daß die strukturierte Oberfläche mechanisch oder lithographisch mit unstrukturierten Teilbereichen versehen wird.

20. Verwendung der strukturierten Oberflächen mit zellproliferationshemmenden Eigenschaften gemäß einem der Ansprüche 1 bis 12 für Zellkulturgefäße oder als Bioassay.

21. Verwendung der strukturierten Oberfläche mit zellproliferationshemmenden Eigenschaften gemäß einem der Ansprüche 1 bis 12 im Zell- oder Wirkstoffscreening, in der Medizin, im Pflanzenschutz oder in der Toxikologie.

22. Verwendung der strukturierten Oberfläche mit zellproliferationshemmenden Eigenschaften gemäß einem der Ansprüche 1 bis 12 zur Herstellung von medizinischen Implantaten.
